Europäisches Patentamt

European Patent Office

Office européen des brevets

(19)

(11) Veröffentlichungsnummer: **0 030 726**
**B1**

(12)

# EUROPÄISCHE PATENTSCHRIFT

(45) Veröffentlichungstag der Patentschrift:
23.03.83

(51) Int. Cl.³: **G 01 B 3/10,** B 29 D 3/02

(21) Anmeldenummer: **80107875.9**

(22) Anmeldetag: **15.12.80**

(54) **Messband aus einer bandartigen Kunststoffschicht.**

(30) Priorität: **15.12.79 DE 2950580**

(43) Veröffentlichungstag der Anmeldung:
**24.06.81 Patentblatt 81/25**

(45) Bekanntmachung des Hinweises auf die Patenterteilung:
**23.03.83 Patentblatt 83/12**

(84) Benannte Vertragsstaaten:
**FR GB**

(56) Entgegenhaltungen:
**CH-A-387 306**
**DE-B-1 187 812**
**FR-A-1 328 447**
**FR-A-1 460 900**
**FR-A-1 567 213**
**US-A-3 042 990**

(73) Patentinhaber: **Meywald, Volker, Dipl.-Ing.,
Ostpreussenstrasse 72, D-3548 Arolsen (DE)**

(72) Erfinder: **Meywald, Volker, Dipl.-Ing.,
Ostpreussenstrasse 72, D-3548 Arolsen (DE)**

(74) Vertreter: **Patentanwälte Dipl.-Ing. Rudolf Bibrach
Dipl.-Ing. Elmar Rehberg, Pütterweg 6 Postfach 738,
D-3400 Göttingen (DE)**

Meßband aus einer bandartigen Kunststoffschicht

Die Erfindung bezieht sich auf ein Meßband aus einer bandartigen Kunststoffschicht, die auf ihrer Oberfläche mit einer Maßeinteilung versehen ist und ggf. in Bandlängsrichtung gerade angeordnete Zugträger umschließt, wobei Mittel zur Erhöhung der Reißfestigkeit (Längsreißfestigkeit) gegen quer zu den Zugträgern bzw. zur Bandlängsrichtung auf das Meßband einwirkende Kräfte vorgesehen sind.

Derartige Kunststoffmeßbänder sind aus der DE-AS 1 187 812 bekannt. Die bandartige Kunststoffschicht besteht dabei aus zwei bandförmigen Folien oder Folienhälften aus thermoplastischem Kunststoff, welche von beiden Seiten auf die Fadenlage der Zugträger zu deren Abdeckung aufgebracht und unter Einbettung der Zugträger so miteinander verschweißt sind, daß das Band eine glatte Oberfläche erhält. Das Verschweißen erfolgt unter Preßdruck, wodurch der thermoplastische Kunststoff im Bereich der Zugträger teilweise in die Zwischenräume zwischen den Zugträgern verdrängt wird. Da derartige Bänder in Querrichtung eine verhältnismäßig geringe Reißfestigkeit (Längsreißfestigkeit) aufweisen, weil die Zugträger nicht miteinander verwebt sind, sind als Mittel zur Erhöhung der Reißfestigkeit (Längsreißfestigkeit) gegen quer zu den Zugträgern auf das Meßband einwirkende Kräfte zusätzlich zu den als Längsfäden ausgebildeten Zugträgern diese kreuzende zusätzliche Fäden vorgesehen, die ebenfalls in die Kunststoffschicht eingebettet sind. Diese Mittel bzw. zusätzliche Fäden sind nicht nach Art eines Gewebes mit den Zugträgern verbunden, schlingen sich also nicht um die Zugträger, sondern sind auf einer Seite sämtlicher Zugträger oder auf beiden Seiten sämtlicher Zugträger auf diese aufgelegt, wobei sie wellenförmig angeordnet sind. In den Bereichen zwischen diesen wellenförmigen Fäden ist dagegen nur die Kunststoffschicht vorgesehen. Dies bedeutet, daß dieses bekannte Meßband örtlich gesehen jeweils unterschiedliche Längsreißfestigkeit besitzt. In den Bereichen, die von den wellenförmigen Zusatzfäden abgedeckt sind, ist die Längsreißfestigkeit verbessert, in den Bereichen zwischen den wellenförmigen Fäden ist die Längsreißfestigkeit nicht verbessert. Die Verwendung dieser wellenförmig angeordneten Zusatzfäden bringt den weiteren Nachteil mit sich, daß sich der Zusatzfaden in seiner Wellenform an der Oberfläche der Kunststoffschicht abbildet, also eine örtlich auftragende Oberfläche bildet, die schwierig zu bedrucken ist, weil sie eben nicht eben verläuft. Auch sind diese auftragenden Zusatzfäden an der Oberfläche der Kunststoffschicht einem erhöhten Verschleiß ausgesetzt, weil sie durch Scheuerwirkung zunächst beansprucht werden. Weiterhin ist es aufwendig, diese Zusatzfäden wellenförmig auf die Zugträger aufzubringen und dort zu fixieren. Eine schnellaufende Produktion ist nicht möglich. Beispielsweise kann ein solches Meßband nicht durch Spritz- oder Tauchverfahren hergestellt werden, sondern es ist erforderlich, die beiden Kunststoffbänder genau gegenüber den Zugträgern zu positionieren und alles zusammen aufwendig zu verschweißen. Durch Extrudieren läßt sich ein solches Meßband auch nicht herstellen, weil die wellenförmige Anordnung des Zusatzfadens oder der Zusatzfäden nicht stabil durch eine Düse hindurchgepreßt werden kann.

Ein anderes bekanntes Maßband besitzt innerhalb einer Kunststoffschicht ein Glasfasergewebe, bei dem die Schußfäden die Zugträger darstellen und bei dem der Kettfaden ohne wesentliche Spannung in das Gewebe eingebracht ist, also um die gerade angeordneten Zugträger jeweils wellenförmig herumgelegt ist. Hierbei ist die örtliche Entfernung des einen Kettfadens zu dem benachbarten Kettfaden schon sehr viel kleiner als bei der Verwendung des oben beschriebenen wellenförmigen Zusatzfadens, jedoch tritt hier der besondere Nachteil auf, daß sich eine besonders buckelige Oberfläche an der Kunststoffschicht ausbildet, die noch schwieriger zu bedrucken ist. Darüber hinaus besitzen die Kanten der Kunststoffschicht bzw. des Glasfasergewebes eine Rauhigkeit oder Unregelmäßigkeit, die unerwünscht ist.

Bei den beiden oben beschriebenen Meßbändern besteht der weitere Nachteil, daß sie eine unzureichende Steifigkeit in Querrichtung zur Längsachse aufweisen, so daß sie sich leicht so verformen können, daß sich der Querschnitt U-förmig verformt. In Verbindung mit einer gewissen Lappigkeit ergibt sich somit leicht die Möglichkeit, daß das Band in Längsrichtung geknickt und/oder verdreht wird, was dann den Angang zu einem Längsriß darstellt.

Der Erfindung liegt die Aufgabe zugrunde, das eingangs benannte Meßband derart weiterzubilden, daß es örtlich überall gleiche Reißfestigkeit gegen quer zu den Zugträgern bzw. zur Längsrichtung auf das Meßband einwirkende Kräfte aufweist und im Vergleich zu den bisher bekannten Meßbändern auch eine größere Steifigkeit in Querrichtung zur Längsachse besitzt.

Erfindungsgemäß wird dies dadurch erreicht, daß die Mittel aus geschnittenen Fasern, insbesondere Glas- oder Kohlefasern, besthen, die der Kunststoffschicht als Füllstoff beigefügt und mit örtlich etwa gleicher anteilmäßiger Verteilung in der Kunststoffschicht vorzugsweise unausgerichtet zur Bandlängsrichtung der Kunststoffschicht angeordnet sind. Wesentlich ist zunächst, daß es sich um geschnittene Fasern und nicht um gemahlene Fasern handelt, also um Faserabschnitte, die im Vergleich zu ihrem Durchmesser eine wesentlich größere axiale Länge bzw. Längserstreckung aufweisen. So kann eine geschnittene Glasfaser beispielsweise eine Länge von 1,5 bis 2 mm aufweisen und gleichzeitig einen Durchmesser von etwa 0,011 mm besitzen. Diese geschnittenen Fasern sind der Kunststoffschicht als Füllstoff beigefügt. Damit ist einerseits sichergestellt, daß der Anteil der Fasern innerhalb der bandartigen Kunststoffschicht örtlich überall gleich ist bzw. im wesentlichen gleich ist. Es gibt also keine freien Stellen, an denen die Längsreißfestigkeit örtlich nicht verbessert wäre. Die geschnittenen Fasern sind weiterhin unausgerichtet zur Bandlängsrichtung in der Kunststoffschicht angeordnet, erstrecken sich also in allen Raumrichtungen und nach allen Raumrichtungen. Durch die jeweilige Umhüllung jedes Fasernabschnittes und den innigen Kontakt zwischen dem Kunststoff und dem Füllstoff tritt eine optimale Versteifung bzw. Festigkeitssteigerung ein. Diese Festigkeitssteigerung erstreckt sich ebenfalls in alle Raumrichtungen, dient also auch der Erhöhung der Längsreißfestigkeit. Daneben wird durch ihre Anordnung in vorteilhafter Weise aber auch die Festigkeit der Zugträger unterstützt bzw. erhöht, was also auch der Verbesserung der Querreißfestigkeit dient. Sind keine Zugträger vorgesehen, dann übernehmen die geschnittenen Fasern auch die Funktion der Zugträger. Dann ist eher förderlich, wenn die Fasern beim Extrudieren des Bandes und beim Durchdrücken durch eine Düse etwa in Bandlängsrichtung ausgerichtet werden, denn die dadurch erhöhte Querreißfestigkeit muß im Vergleich zur Längsreißfestigkeit sowieso größer sein. Als weiterer Vorteil ergibt sich die Verbesserung der Maßstabilität. Diese hängt beim Stand der Technik nahezu ausschließlich von der Anordnung und Ausbildung der Zugträger ab, während die geschnittenen Fasern infolge ihrer unregelmäßigen Anordnung auch die Maßstabilität verbessern. Auch die Steifigkeit in Querrichtung zur Längsachse wird verbessert, so daß einer Neigung des Bandes, sich im Querschnitt U-förmig zu verformen, entgegengewirkt wird. Durch die erhöhte Steifigkeit verdreht sich das Meßband auch nicht so leicht bei Benutzung. Als weitere vorteilhafte Folge ergibt sich die Möglichkeit, das Band auch nur einseitig mit der Maßeinteilung auszurüsten; das Band muß also nicht notwendigerweise die gleiche Teilung auf beiden Seiten tragen. Schließlich ergibt der Füllstoff an geschnittenen Fasern innerhalb der Kunststoffschicht eine feinstrukturierte Oberfläche im Mikrorauhigkeitsbereich, was für den Bedruckungsvorgang mit der Maßeinteilung insofern nützlich ist, als daß die Druckfarbe besser auf dieser Oberfläche hält. Die angesprochene Mikrorauhigkeit ist aber so gering, daß sie nicht erfühlt werden kann, so daß das Band makroskopisch betrachtet eine glatte Oberfläche besitzt. Die geschnittenen Fasern des Füllstoffes der Kunststoffschicht und die darin gerade angeordneten Zugträger können aus dem gleichen Material, z. B. aus Kohlefasern, bestehen. Freilich sind Unterschiede im Durchmesser vorhanden. Die Verwendung von gleichem Material ist insofern vorteilhaft, als sich eine gleiche Haftung und Verträglichkeit zwischen dem jeweiligen Kunststoff und dem Füllstoff ergeben. Es ist aber auch möglich, unterschiedliches Material einzusetzen, wobei die Zugträger aus Glasfasern, Kohlefasern, aus Federstahldraht od. dgl. bestehen können. Es ist auch möglich, einzelne Zugträger aus einem leitenden Metalldraht, z. B. aus Kupferdraht einzusetzen, die dann gleichzeitig für die Übertragung elektrischer Signale genutzt werden können. Die geschnittenen Fasern können anorganische Fasern, z. B. Asbest-, Metall- oder Glasfasern sein. Auch organische Fasern, z. B. Kunststoffasern, können in geschnittener Form eingesetzt werden. Dabei ist in allen Fällen die Haftung zwischen den geschnittenen Fasern des Füllstoffes und der Kunststoffschicht zu berücksichtigen bzw. aufeinander abzustimmen.

Vorteilhaft sind die geschnittenen Fasern sog. Langschnittfasern, deren Verhältnis Länge zu Durchmesser etwa zwischen 50 : 1 und 150 : 1 liegt. Dies hat seine Ursache darin, daß die einzelne geschnittene Faser mit dem Kunststoff der Kunststoffschicht auf ihrer Länge jeweils in Verbindung stehen muß, um den räumlichen nach allen Raumrichtungen wirkenden Versteifungseffekt herbeizuführen. Zu kurze Fasern, beispielsweise gemahlene Fasern, erfüllen den beabsichtigten Effekt nur in unvollkommener Weise.

Die geschnittenen Fasern als Füllstoff enthaltende Kunststoffschicht kann durch Extrudieren oder Spritzen um die Zugträger herum angeordnet sein. Dies zeigt, daß das Meßband mit modernen Produktionsmethoden hergestellt werden kann.

Durch die Verwendung der geschnittenen Fasern, die sich auch an der Oberfläche der bandartigen Kunststoffschicht befinden, ergibt sich schon eine gewisse Mikrorauhigkeit, die für den Bedruckungsvorgang mit der Maßeinteilung günstig ist. Diese Mikrorauhigkeit der Oberfläche der Kunststoffschicht kann noch durch Pressen, Walzen od. dgl. mit Riffelwalzen erhöht sein. Die Mikrorauhigkeit der Oberfläche oder auch die erhöhte Mikrorauhigkeit der Oberfläche wirkt sich auch dann günstig aus, wenn die Kunststoffschicht mit der aufgedruckten Maßeinteilung noch durch einen transparenten Schutzüberzug abgedeckt ist; hier ergibt sich eine günstige Haftung zwischen Kunststoffschicht und Schutzüberzug. Werden bei der Herstellung keine gesonderten Zugträger eingesetzt, dann übernehmen die geschnittenen Fasern auch die Funktion der Zugträger; die geschnittenen Fasern werden der Kunststoffschicht in hohem Füllgrad beigefügt. Die geschnittenen Fasern können an den Kunststoff der Kunststoffschicht chemisch gekoppelt sein, so daß wesentlich größere Kräfte zwischen Kunststoff und Fasern übertragen werden können als bei bloßer Haftreibung.

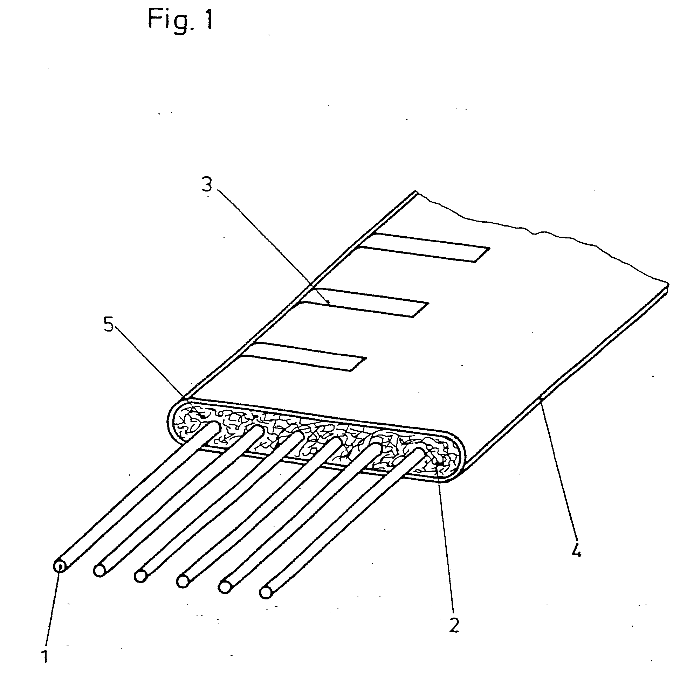

Die Erfindung wird anhand eines Ausführungsbeispieles des Meßbandes weiter beschrieben, welches in der Zeichnung perspektivisch dargestellt ist.

In der Mitte des Meßbandes in symmetrischer Anordnung sind sechs Zugträger 1 aus Glasfaser, Kohlefaser od. dgl. vorgesehen. Diese Zugträger erstrecken sich gerade im Meßband und nehmen während des Messens auch im wesentlichen die auf das Meßband einwirkende Zugspannung auf. Die Zugträger 1 sind in der bandartigen Kunststoffschicht 2 eingebettet, die die Zugträger allseits umschließt. Die Zugträger sind mit der Kunststoffschicht verhaftet. Auf der Oberfläche der Kunststoffschicht 2 befindet sich eine aufgedruckte Maßeinteilung 3, die hier nur schematisch angedeutet ist. Die Maßeinteilung 3 kann noch von einem transparenten Schutzüberzug 4 abgedeckt sein, der sich in gleicher Stärke um die gesamte Kunststoffschicht 2 herum erstreckt. Der Schutzüberzug 4 erstreckt sich also über die beiden Seiten des Meßbandes wie auch über deren Kanten.

Die Kunststoffschicht 2 weist als Füllstoff geschnittene Fasern 5 auf, die als Längsschnittfasern ausgebildet sind. Besonders günstige Ergebnisse hinsichtlich erhöhter Längsreißfestigkeit, verbesserter Maßstabilität und verbesserter Steifigkeit in Querrichtung zur Bandlängsachse wurde erzielt, wenn das Verhältnis von Länge zu Durchmesser der geschnittenen Fasern 5 innerhalb eines Bereiches von 50 : 1 und 150 : 1 liegt. Wichtig ist, daß die geschnittenen Fasern 5 örtlich gesehen in gleichem Anteil, also homogen verteilt über den gesamten Bandquerschnitt angeordnet sind. Andererseits sollten die geschnittenen Fasern 5 in ihre Richtung aber völlig unregelmäßig zur Bandlängsrichtung angeordnet sein, so daß sie sich in alle Raumrichtungen erstrecken, um somit einen nach allen Raumrichtungen wirkenden Versteifungseffekt zu bringen. Freilich läßt sich eine gewisse Ausrichtung der geschnittenen Fasern 5 innerhalb der Kunststoffschicht 2 dann nicht vermeiden, wenn die Kunststoffschicht 2 im Extrudierverfahren um die Zugträger 1 herum angeordnet wird. Diese Ausrichtwirkung ist aber so klein, daß sie sich jedenfalls nicht nachteilig bemerkbar macht.

## Patentansprüche

1. Meßband aus einer bandartigen Kunststoffschicht, die auf ihrer Oberfläche mit einer Maßeinteilung versehen ist und ggf. in Bandlängsrichtung gerade angeordnete Zugträger umschließt, wobei Mittel zur Erhöhung der Reißfestigkeit gegen quer zu den Zugträgern bzw. zur Bandlängsrichtung auf das Meßband einwirkende Kräfte vorgesehen sind, dadurch gekennzeichnet, daß die Mittel aus geschnittenen Fasern (5), insbesondere Glas- oder Kohlefasern, bestehen, die der Kunststoffschicht (2) als Füllstoff beigefügt und mit örtlich etwa gleicher anteilmäßiger Verteilung in der Kunststoffschicht vorzugsweise unausgerichtet zur Bandlängsrichtung in der Kunststoffschicht angeordnet sind.

2. Meßband nach Anspruch 1, dadurch gekennzeichnet, daß die geschnittenen Fasern (5) des Füllstoffes der Kunststoffschicht (2) und die darin gerade angeordneten Zugträger (1) aus dem gleichen Material, z. B. Kohlefasern, bestehen.

3. Meßband nach Anspruch 1 oder 2, dadurch gekennzeichnet, daß die geschnittenen Fasern (5) anorganische Fasern, z. B. Asbest-, Metalloder Glasfasern, oder organische Fasern, z. B. Kunststoffasern, sind.

4. Meßband nach einem oder mehreren der Ansprüche 1 bis 3, dadurch gekennzeichnet, daß die geschnittenen Fasern (5) Langschnittfasern sind, deren Verhältnis Länge zu Durchmesser etwa zwischen 50 : 1 und 150 : 1 liegt.

5. Meßband nach Anspruch 1 bis 4, dadurch gekennzeichnet, daß die die geschnittenen Fasern (5) als Füllstoff enthaltende Kunststoffschicht (2) durch Extrudieren oder Spritzen um die Zugträger (1) herum angeordnet ist.

6. Meßband nach Anspruch 5, dadurch gekennzeichnet, daß die Mikrorauhigkeit der Oberfläche der Kunststoffschicht (2) durch Pressen, Walzen od. dgl. mit Riffelwalzen erhöht ist.

7. Meßband nach Anspruch 1 bis 6, dadurch gekennzeichnet, daß die die geschnittenen Fasern (5) als Füllstoff enthaltende Kunststoffschicht (2) auf ihrer mikrorauhen Oberfläche eine aufgedruckte Maßeinteilung (3) trägt, die durch einen transparenten Schutzüberzug (4) abgedeckt ist.

8. Meßband nach Anspruch 1, 3 und 4, dadurch gekennzeichnet, daß die geschnittenen Fasern (5) ohne Verwendung von Zugträgern (1) dem Kunststoff der Kunststoffschicht (2) mit hohem Füllgrad beigefügt sind.

9. Meßband nach Anspruch 2 oder 8, dadurch gekennzeichnet, daß die geschnittenen Fasern (5) an den Kunststoff der Kunststoffschicht (2) chemisch gekoppelt sind.

## Claims

1. Measuring tape consisting of a tape-like plastic layer which is provided on its surface with a measurement graduation and which, if appropriate, surrounds tension supports arranged in a straight line in the longitudinal direction of the tape, means being provided for increasing the tear resistance against forces acting on the measuring tape transversely to the tension supports or to the longitudinal direction of the tape, characterised in that the means consist of cut fibres (5), especially glass or carbon fibres, which are added to the plastic layer (2) as a filler and which are arranged in the plastic layer in a distribution of approximately equal local proportions in the plastic layer, preferably unaligned in relation to the longitudinal direction of the tape.

2. Measuring tape according to claim 1, characterised in that the cut fibres (5) of the filler of the plastic layer (2) and the tension supports (1) arranged in a straight line therein consist of the same material, for example carbon fibres.

3. Measuring tape according to claim 1 or 2, characterised in that the cut fibres (5) are inorganic fibres, for example asbestos, metal or glass fibres, or organic fibres, for example plastic fibres.

4. Measuring tape according to one or more of claims 1 to 3, characterised in that the cut fibres (5) are fibres cut lengthwise, the length-to-diameter ratio of which is approximately between 50 : 1 and 150 : 1.

5. Measuring tape according to claims 1 to 4, characterised in that the plastic layer (2) containing the cut fibres (5) as a filler is arranged around the tension supports (1) by means of extrusion or injection-moulding.

6. Measuring tape according to claim 5, characterised in that the micro-roughness of the surface of the plastic layer (2) is increased as a result of pressing, rolling or the like by means of serrated rollers.

7. Measuring tape according to claims 1 to 6, characterised in that the plastic layer (2) containing the cut fibres (5) as a filler bears on its micro-rough surface a printed-on measurement graduation (3) which is covered by a transparent protective covering (4).

8. Measuring tape according to claims 1, 3 and 4, characterised in that the cut fibres (5) are added to the plastic of the plastic layer (2) with a high degree of filling without the use of tension supports (1).

9. Measuring tape according to claim 2 or 8, characterised in that the cut fibres (5) are coupled chemically to the plastic of the plastic layer (2).

**Revendications**

1. Ruban de mesure constitué par une couche de matière artificielle en forme de bande, qui est munie à sa surface d'une graduation et contient éventuellement des renforts de traction disposés de façon rectiligne selon la direction longitudinale de la bande, des moyens étant prévus pour accroître la résistance à la rupture à l'égard de forces s'exerçant sur ce ruban de mesure transversalement aux renforts de traction, et respectivement à la direction longitudinale de la bande, caractérisé en ce que ces moyens consistent en des fibres coupées, en particulier des fibres de verre ou de carbone, qui sont associées à la couche de matière artificielle comme matière de remplissage et qui sont disposées selon une répartition localement à peu près uniforme dans la couche de matière artificielle, de préférence de façon non orientée par rapport à la direction longitudinale de la bande dans la couche de matière artificielle.

2. Ruban de mesure selon la revendication 1, caractérisé en ce que les fibres coupées de la matière de remplissage de la couche de matière artificielle et les renforts de traction qui y sont disposés à l'intérieur de façon rectiligne sont formés de la même matière, par exemple des fibres de carbone.

3. Ruban de mesure selon l'une des revendications 1 ou 2, caractérisé en ce que les fibres coupées sont des fibres inorganiques, par exemple des fibres d'amiante, des fibres métalliques ou des fibres de verre, ou sont des fibres organiques, par exemple des fibres de matière artificielle.

4. Ruban de mesure selon l'une ou plusieurs des revendications 1 à 3, caractérisé en ce que les fibres coupées sont des fibres longues, dont le rapport de la longueur sur le diamètre se trouve environ entre 50 : 1 et 150 : 1.

5. Ruban de mesure selon les revendications 1 à 4, caractérisé en ce que la couche de matière artificielle contenant les fibres coupées comme matière de remplissage est disposée autour des renforts de traction par extrusion ou injection.

6. Ruban de mesure selon la revendication 5, caractérisé en ce que la micro-rugosité de la surface de la couche de matière artificielle est accrue par pressage ou laminage ou traitement similaire à l'aide de cylindres cannelés.

7. Ruban de mesure selon les revendications 1 à 6, caractérisé en ce que la couche de matière artificielle contenant les fibres coupées comme matière de remplissage porte, sur sa surface présentant une micro-rugosité, une graduation imprimée qui est recouverte d'un revêtement transparent.

8. Ruban selon les revendications 1, 3 et 4, caractérisé en ce que les fibres coupées sont ajoutées à la matière artificielle de la couche de matière artificielle avec un haut degré de remplissage, sans emploi de renforts de traction.

9. Ruban de mesure selon la revendication 2 ou 8, caractérisé en ce que les fibres coupées sont liées chimiquement à la matière artificielle de la couche en matière artificielle.

Fig. 1